(19) Europäisches Patentamt

European Patent Office

Office européen des brevets

(11) Publication number: **0 286 740 B1**

# EUROPEAN PATENT SPECIFICATION

(45) Date of publication of patent specification: **07.08.91**  (51) Int. Cl.⁵: **H02H 9/04**, H01H 37/32

(21) Application number: **87303238.7**

(22) Date of filing: **14.04.87**

(54) Transient suppressor.

(43) Date of publication of application:
**19.10.88 Bulletin 88/42**

(45) Publication of the grant of the patent:
**07.08.91 Bulletin 91/32**

(84) Designated Contracting States:
**AT BE CH DE ES FR GB GR IT LI LU NL SE**

(56) References cited:
EP-A- 0 129 035
DE-A- 3 145 616
US-A- 4 134 092

(73) Proprietor: **Semitron Industries Limited**
**Chelworth Industrial Estate**
**Cricklade Wiltshire(GB)**

(72) Inventor: **Bell, Malcolm Sanderson**
**Flat 4 Oxford House London Road**
**Cirencester, Glos(GB)**

(74) Representative: **Allam, Peter Clerk et al**
**LLOYD WISE, TREGEAR & CO. Norman**
**House 105-109 Strand**
**London WC2R 0AE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a transient suppressor according to the preamble of claim 1.

In certain applications it is important to ensure that failure of an electronic component renders it short circuit. This is particularly applicable to transient voltage suppression devices because any other type of failure will result in damage to circuitry that the device is installed to protect.

In the past such devices as gas discharge tubes and transient absorption Zener diodes have been protected by various external systems which short the device terminals when the device reaches a certain temperature. Two methods of achieving this result have commonly been used.

In the first method a mass of solder is melted when the device reaches a pre-determined temperature and it is this molten solder which shorts out the device. This failure mode can be unpredictable in its operation and can lead to the hazard of molten solder being ejected from the device. It has proved difficult to incorporate a reliable system based on this principle into a very small device package.

The second method of ensuring a short circuit failure mode uses a change in the physical characteristics of plastic sleeving material to effect the shorting. This change allows a spring to short out the contacts of the device. The change of physical characteristics takes place at a pre-determined temperature.

As a result of this change of physical characteristics at a predetermined temperature, melting of the plastic insulating sleeve allowing a short to occur has been used, as well as a longitudinal shrinking of the tubing which again allows shorting. Both methods have problems due to reproducibility and reliability. It is possible for the short to occur intermittently.

These can be lead to degradation of the transient suppressor device and the circuitry it is protecting.

The present invention provides an improved transient suppressor according to claim 1 in which the aforementioned disadvantages are overcome. A transient suppressor according to this invention using heatshrink tubing, which tears at the point of stress, works much better than a transient suppressor according to the prior art.

At least one piece of heatshrink tubing is placed on at least one electrical contact of the transient suppressor. The inside diameter of this tubing is selected so that there is a loose fit of the tubing on the lead, but when taken above its heatshrink temperature, its diameter is reduced to a value lower than the diameter of the electrical contact passing through it. A spring is attached so that it is able to put additional stress on the heatshrink tubing of at least one electrical contact so that at least one heatshrink tubing tears at the point of contact allowing an irreversible short to occur. The transient suppressor can have two or more electrical contacts (diode, foldback diode, thyristor, triac, gas discharge tube, varistor). The spring can be attached to an electrical contact in order to tear the heatshrink tubing on at least one other electrical contact to short out the contacts of the device. The spring can also be attached to another point in order to tear the heatshrink tubing on at least two electrical contacts to short out the contacts of the device. The spring can be a spring clip in order to put stress on the pieces of several heatshrink tubings of several electrical contacts.

The electrical contacts can be bent in order to concentrate the additional stress upon the heatshrink tubing which additional stress is caused by a spring. There can be used several springs.

Those skilled in the art will readily be able to determine from the following explanations and by routine trial and experiment suitable modifications which cause at least one heatshrink tubing to tear at a pre-determined temperature.

In order that the invention may be more fully understood an embodiment thereof and its operating characteristics will now be described by way of illustrative example, reference being had to the accompanying drawings wherein:

FIG 1 shows schematically a longitudinal section of a transient suppressor according to the invention

FIG 2 shows schematically the front sight of the transient suppressor of FIG 1.

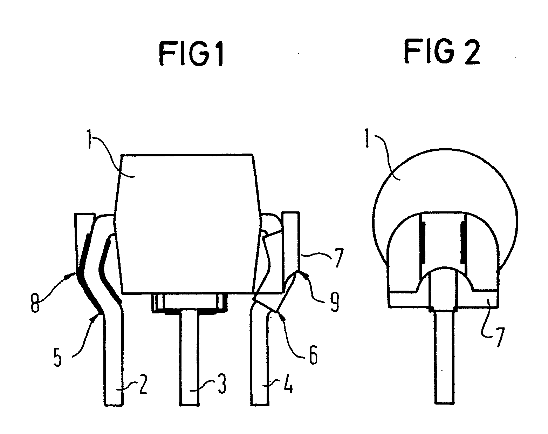

FIG 1 shows a semiconductor transient suppressor. It consists of a moulded plastic body 1, from which protrude three leads 2, 3, 4. Leads 2 and 4 are bent as shown. Placed on leads 2 and 4 are two pieces of heatshrink tubing 5, 6. The inside diameter of this tubing is selected so that it is a loose fit of the tubing on the lead, but when taken above its heatshrink temperature, its diameter is reduced to a value much lower than the diameter of lead passing through it. A spring clip 7 is attached to lead 3 and is insulated from leads 2 and 4 by the heatshrink tubing. When the temperature of lead 2 or lead 4 exceeds the heatshrink temperature of the sleeving, it shrinks rapidly. Its ideal diameter is smaller than the lead diameter so it is under tension. The points of contact 8 and 9 of the clip put additional stress on the heatshrink tubing, concentrated by the effect of the bend in the wire. In addition the heatshrink tubing is softened at elevated temperature. It tears at the point of contact, allowing an irreversible short to occur. A suitable type of heatshrink tubing has been found to be type CRN, manufactured by Raychem Limited, Swindon, England. This invention has proved particularly effective when applied to the Semitron L10-140 CD, manufactured by Semitron Cricklade Ltd., Cricklade Swindon, Wiltshire SN6 6HQ, GB. This device is of the "foldback" type as proposed in European Patent number EP-A-0088 179. The L10-140 CD is designed to protect telecommunications circuitry from lightning strikes. The device is particularly effective in this application and always exhibits the required short circuit condition when its rating is exceeded. If, however, accidental 240 volt AC mains contact occurs, the device can undergo a progressive degradation in its performance parameters, which is not acceptable.

A device manufactured according to the teaching of this invention, however, does not suffer such a degradation.

An assembly manufactured according to the above teaching goes short circuit within one minute when 240v AC mains currents between 200mA and 5A are passed through it. The circuitry the L10-140 CD is installed to protect is completely undamaged by the mains contact.

Although the invention has been applied by this embodiment to semiconductor devices, it could be used for other products such as gas discharge tubes and varistors.

## Claims

1.  Transient suppressor having at least two electrical leads (2,3,4), at least one electrical lead (2,4) having a plastic insulating sleeve (5,6) allowing above a pre-determined temperature a spring (7) attached to the suppressor to short out at least two leads (2,3;3,4) of the suppressor,
    characterized in that
    at least one piece of heatshrink tubing (5,6) placed on at least one lead (2,4),
    that the inside diameter of this tubing is selected so that there is a loose fit of the tubing on the lead, but when taken above its heatshrink temperature, its diameter is reduced to a value lower than the diameter of lead passing through it,
    that the attached spring (7) is able to put additional stress on the heatshrink tubing of at least one lead so that at least one heatshrink tubing is able to tear at the point of contact, allowing an irreversible short to occur.

2.  Transient suppressor according to claim 1,
    characterized in that
    pieces of heatshrink tubing (5,6) are placed at all leads (2,3,4).

3.  Transient suppressor according to claim 1,
    characterized in that
    only one piece of heatshrink tubing (5,6) is placed at just one lead. (2,4).

4.  Transient suppressor according to one of the claims 1 to 3,
    characterized in that
    at least one lead (2,4) is bent at the point of contact (8) of the spring (7) in order to concentrate the stress exerted upon the heatshrink tubing (6) by the spring.

5.  Transient suppressor according to one of the claims 1 to 4, characterized by a spring clip (7).

6.  Transient suppressor according to one of the claims 1 to 5,
    characterized by
    a semiconductor suppressor device.

7.  Transient suppressor according to one of the claims 1 to 5,
    characterized by
    a gas discharge suppressor device.

8.  Transient suppressor according to one of the claims 1 to 5,
    characterized by
    a varistor suppressor device.

## Revendications

1.  Suppresseur de transitoires ayant au moins deux fils électriques (2,3,4), au moins un fil électrique (2,4) ayant un manchon d'isolement en plastique (5,6) permettant au-delà d'une température prédéterminée à un ressort (7) attaché au suppresseur de court-circuiter au moins deux fils (2,3;3,4) du suppresseur,
    caractérisé en ce
    qu'au moins un morceau de manchon thermorétractable (5,6) est placé sur au moins un fil (2,4),
    que le diamètre intérieur de ce manchon est sélectionné de manière à ce que le manchon présente du jeu sur le fil mais une fois sa température de rétrécissement dépassée, son diamètre soit réduit à une valeur inférieure à celle du diamètre du fil passant dans le manchon,
    que le ressort (7) attaché est capable d'imposer une contrainte supplémentaire sur le manchon thermorétractable d'au moins un fil de telle sorte qu'au moins un manchon thermorétractable se déchire au point de contact, entraînant ainsi un court-circuit irréversible.

2. Suppresseur de transitoires selon la revendication 1,
caractérisé en ce que
des morceaux de manchon thermorétractable (5,6) sont placés sur tous les fils (2,3,4)

3. Suppresseur de transitoires selon la revendication 1,
caractérisé en ce que
seulement un morceau de manchon thermorétractable (5,6) est placé sur un seul fil (2,4).

4. Suppresseur de transitoires selon l'une des revendications 1 à 3, caractérisé en ce que
au moins un fil (2,4) est coudé au point de contact (8) du ressort (7) afin de concentrer la contrainte exercée sur le manchon thermorétractable (6) par le ressort.

5. Suppresseur de transitoires selon l'une des revendications 1 à 4, caractérisé par une pince à ressort (7).

6. Suppresseur de transitoires selon l'une des revendications 1 à 5, caractérisé par
un dispositif semi-conducteur de suppression.

7. Suppresseur de transitoires selon l'une des revendications 1 à 5, caractérisé par
un dispositif de suppression à décharge.

8. Suppresseur de transitoires selon l'une des revendications 1 à 5, caractérisé par
un dispositif de suppression à varistance.

**Patentansprüche**

1. Stoßspannungs-Schutzschaltung mit mindestens zwei elektrischen Leitungen (2,3,4), wobei mindestens eine elektrische Leitung (2,4) eine plastische Isolierhülse (5,6) aufweist, die es gestattet, daß eine an der Schutzschaltung angebrachte Feder (7) oberhalb einer vorbe- stimmten Temperatur mindestens zwei Leitun- gen (2,3; 3,4) der Schutzschaltung kurzschließt, dadurch gekennzeichnet, daß auf mindestens einer Leitung (2,4) mindestens ein Stück Schrumpfschlauch (5,6) aufgebracht wird, daß der Innendurchmesser dieses Schlauches so ausgewählt wird, daß der Schlauch locker auf die Leitung paßt, sein Durchmesser jedoch, wenn seine Wärmeschrumpftemperatur überschritten wird, auf einen niedrigeren Wert als der Durchmesser der ihn durchlaufenden Leitung reduziert wird, daß mit der angebrachten Feder (7) zusätzliche Spannung auf den Schrumpfschlauch mindestens einer Leitung ausgeübt werden kann, so daß mindestens ein Schrumpfschlauch an der Kontaktstelle ausreißen kann und damit das Auftreten eines irreversiblen Kurzschlusses ermöglicht.

2. Stoßspannungs-Schutzschaltung nach Anspruch 1, dadurch gekennzeichnet, daß Schrumpfschlauchstücke (5,6) auf alle Leitungen (2,3,4) aufgebracht sind.

3. Stoßspannungs-Schutzschaltung nach Anspruch 1, dadurch gekennzeichnet, daß nur ein Stück Schrumpfschlauch (5,6) auf nur eine Leitung (2,4) aufgebracht ist.

4. Stoßspannungs-Schutzschaltung nach einem der Ansprüche 1 bis 3, dadurch gekennzeichnet, daß mindestens eine Leitung (2,4) an der Kontaktstelle (8) der Feder (7) umgebogen ist, um die durch die Feder auf den Schrumpfschlauch (6) ausgeübte Spannung zu konzentrieren.

5. Stoßspannungs-Schutzschaltung nach einem der Ansprüche 1 bis 4, gekennzeichnet durch eine Klemmfeder (7).

6. Stoßspannungs-Schutzschaltung nach einem der Ansprüche 1 bis 5, gekennzeichnet durch eine Halbleiter-Schutzschaltungsvorrichtung.

7. Stoßspannungs-Schutzschaltung nach einem der Ansprüche 1 bis 5, gekennzeichnet durch eine Gasentladungs- Schutzschaltungsvorrichtung.

8. Stoßspannungs-Schutzschaltung nach einem beliebigen der Ansprüche 1 bis 5, gekenn- zeichnet durch eine Varistor-Schutzschaltungs- vorrichtung.

# FIG 1

# FIG 2